# EUROPEAN PATENT SPECIFICATION

(11) **EP 0 582 463 B1**
(45) Date of publication and mention of the grant of the patent: **29.04.1998**
(21) Application number: 93306129.3
(22) Date of filing: 03.08.1993
(51) Int. Cl.: G11B 21/08, G11B 5/55

(54) **Voice coil motor and disc drive**
Schwingspulenmotor und Platteneinheit
Moteur à bobine mobile et dispositif de disque

(30) Priority: 04.08.1992 US 926168
(43) Date of publication of application: 09.02.1994
(73) Proprietor: SEAGATE TECHNOLOGY INTERNATIONAL, Georgetown Grand Cayman Island (KY)
(72) Inventor: Jabbari, Iraj, San Jose, California 95125 (US); Phillips, Brian L., San Jose, California 95123 (US)
(74) Representative: Kenyon, Sarah Elizabeth

(56) References cited:
- EP-A- 0 432 145
- WO-A-92/01283
- US-A- 5 055 969
- US-A- 5 122 703

## Description

This invention is directed generally to the field of disc drive actuators, and more particularly to improved means for providing electrical connections to a rotary disc drive actuator.

The present invention comprises a method and apparatus for reliably forming the electrical connections between the actuator arm assembly in a disc drive and the control circuits which are mounted elsewhere in the disc drive.

In general, a disc drive contains one or more discs capable of magnetically storing information. The discs are rotated by a spindle motor mounted at the centre of the disc or discs. The information is read and written to specific locations on the disc using magnetic transducers commonly known as heads that fly above the disc surface. Head positioning apparatus is provided in the form of an actuator arm assembly.

The actuator arm assembly consists of a substantially triangularly-shaped actuator arm. Traditionally, the arm is constructed from a low mass material such as cast aluminium. The arm is designed to pivot about a centrally-located pivot bore. The bore co-operates with a bearing system surrounding a fixed shaft enabling the arm to pivot smoothly about the shaft.

At one end of the arm is attached a means for moving the arm about the shaft. In rotary motion actuators of the type incorporating the present invention, the motion is accomplished by a moving coil magnetic motor having the motor coil attached to the arm. Actuating the motor coil by selected control signals which arrive at the coil over wires attached to the coil causes the actuator arm to pivot about the shaft.

The actuator arm will move frequently and rapidly from position to position over the surface of the disc. As disc drives become smaller and smaller, the wires which form the coil in the actuator arm and which lead out from the coil to receive the control signals become increasingly fine. Such small disc drives are expressly designed for incorporation into portable or notebook size computers, which are frequently carried, moved about, and subjected to significant shocks. Therefore, it is an object of this invention to provide lead wires into the coil which are capable of withstanding significant shocks during the lifetime of the disc drive.

As cost is becoming increasingly critical in being competitive in the disc drive market, it is a further objective of the present invention to provide an economically efficient way of attaching the lead wires to the coil of the actuator arm.

Further, as disc drives become smaller in size, the height of the disc drive becomes a crucial factor, and every element of mechanical structure which can minimise the height of the drive must be addressed. It is therefore an object of the present invention to provide structuring of the lead wires to a coil so that a minimal amount of height is utilised.

A prior art disc drive which aims to reduce the overall height of the disc drive is disclosed in WO-A-92/01283. The disc drive disclosed In this prior art document comprises an actuator arm and voice coil assembly. A flex circuit extends to the actuator arm and two wires are drawn off to attach to either end of the voice coil.

Another prior art document, EP-A-0 432 145 discloses a disc drive in which the terminal ends of a transducer coil are drawn off and threaded down protective tubes which are positioned in a recess in an actuator arm.

The technology for forming the coil in a rotary actuator arm in a moving coil magnetic motor presently utilises moulded coils. That is to say, after the metal portion of the actuator arm is formed, the coil is wound and then moulded onto the rear of the arm using a plastic mould which forms a plastic piece which surrounds the coil and also attaches the coil to the arm. It is an object of the present invention to enable the coil and the leads leading out from the coil to be attached to the rear of the actuator arm which minimises the height of the moulded coil and leads, and allows for easy reworking of the coil portion of the moving coil magnetic motor in the event of a structural failure.

According to the present invention there is provided a voice coil motor for positioning an actuator arm of a disc drive, said motor comprising a coil supported in a fork of the arm, the terminal wires of said coil extending beyond said coil, said actuator arm comprising a mould surrounding and supporting said coil, said mould attaching said coil to a rear forked portion of said actuator arm to hold said coil in place, characterized in that said terminal wires are disposed in respective sleeves to protect and support said terminal wires, and in that said mould extends at least partially over said sleeves for said terminal wires.

Thus, the present invention is intended to provide a disc drive achieving a low profile moulded coil for a rotary actuator arm and method of manufacture. More specifically, the present invention provides a very low profile lead connection from a rotary actuator arm moulded coil for the leads which must be let out to provide control signals to the coil.

The invention further provides a simplified way of forming a moulded coil in a rotary actuator arm.

The present invention comprises a method for forming the lead coils from a moulded coil mounted at the rear of an actuator arm wherein after the coil is wound, the two lead wires from either end of the coil are let out from the end of the coil and plastic tubes are slid over the wires up to a point closely adjacent the wound coil. The wound coil is then moulded, fixing its shape and holding it in place on the rear of the actuator arm. The tubes, preferably of Teflon, protect the leads from being unduly stressed during the forming of the mould, and increase the wire strength so that the coil and mould can tolerate handling stresses during testing and assembly.

Additional objects and features of the present invention will be more readily apparent from the following detailed description of embodiments of the present invention when taken in conjunction with the drawings, in which:
Fig. 1 is a cutaway view of a disc drive incorporating the preferred embodiment of the present invention;
Fig. 2 is a detail view of a portion of the moulded coil and lead wire assembly used in prior art actuators;
Fig. 3 is a sectional view of the moulded coil and lead wire mount assembly of Fig. 2; and
Fig. 4 is a detail plan view of the mould coil actuator of the present invention showing in detail the flying leads protected by Teflon tubing.

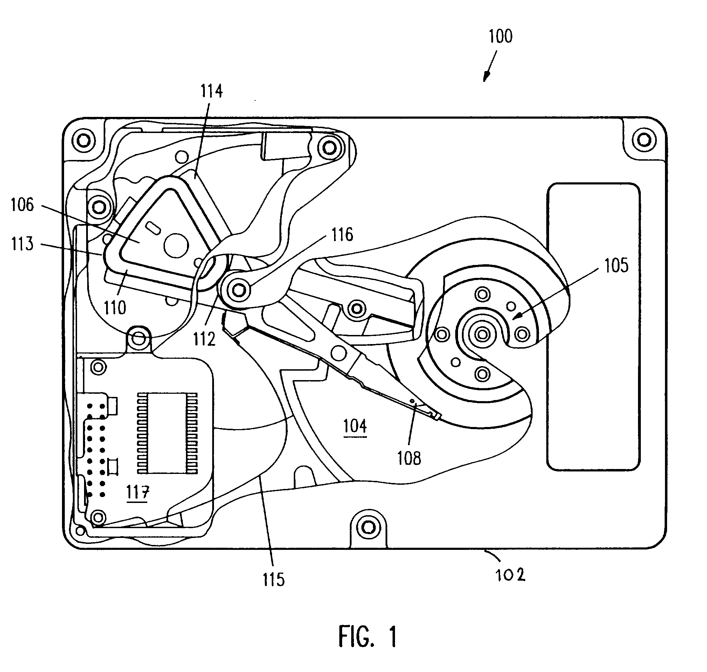

Referring to figure 1, there is shown a cutaway view of a disc drive incorporating the preferred embodiment of the present invention. Essentially, the depicted disc drive 100 includes the same basic components and operates in the same manner as was previously described in the foregoing background section. In summary, a casing 102 surrounds a disc 104 and a centrally located spindle motor 105 which supports discs 104 for rotation. Also within casing 102 is an actuator arm assembly 106 having a read/write head assembly 108 mounted at one end. At the other end is a magnetic voice coil actuator motor 110 for moving the head assembly 108 to the desired location over the disc 104.

Thin wires 112 are attached to the voice coil 113 of the motor 110 which is carried on the rear of an actuator arm 114. These thin wires are attached to a flexible portion of the printed circuit cable (PCC) 115 near to a pivot point 116 of the actuator arm assembly 106. The PCC 115 arcs away from a fixed point on the actuator arm assembly where it is connected to the voice coil 113 and leads toward a rigidly mounted portion 117 of the printed circuit connector.

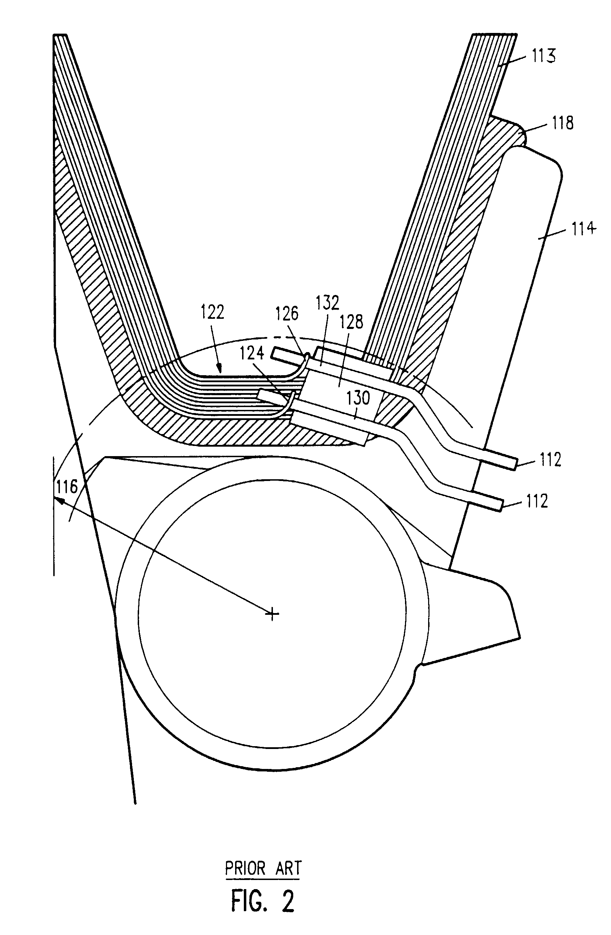

It is already known in this technology (e.g. from US-A-5.122.703 reflecting the preamble of independent claim 1), to first wind the coil, and then form a mould of plastic material or the like around the coil to bond the coil into the rear portion 114 of the actuator arm and hold the coil in place. This is shown in detail in figure 2 of the present application, labelled "PRIOR ART", as representing this known method. Figure 2 shows a wound coil 113, held in place by moulding element 118 inside the fork 114 of the rear portion of the actuator arm to the rear of the pivot point 116. The two ends of the coil leads which are wound to form the coil 113 appear at the portion of the wound coil 122 closest to the pivot point 116. These two coil leads 124, 126 are supported over a coil block 128 and bonded in place in grooves 130, 132 in that block to maintain their position relative to the coil. They pass out over these grooves in the coil block 128 to a respective pin 112 to a point beyond the actuator arm 114 where they can be connected to the PCC cable 115 shown in figure 1.

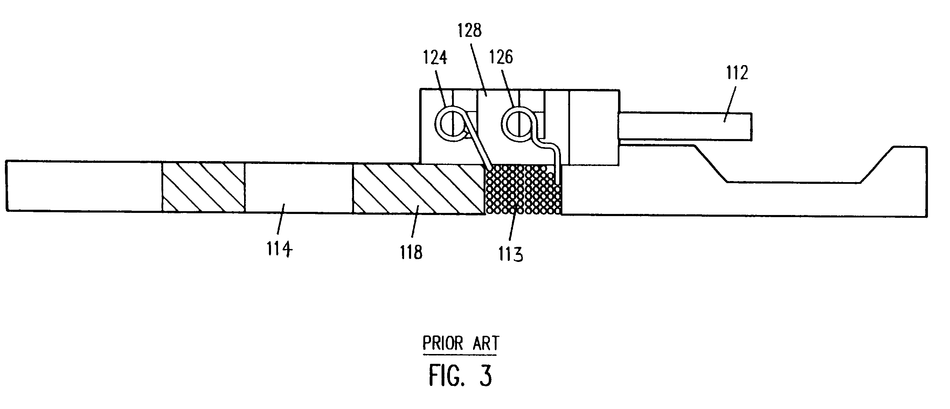

The vertical sectional view of figure 3 makes more apparent the disadvantage of this approach. Figure 3 shows the coil 113, moulding 118, and actuator arm fork 114. As can be seen, the mounting block 128 rests on top of the coil, and the wires 124, 126 must be wound about respective pins 112 which lead out to the external connections. Thus the entire height of the block 128 is added height to the voice coil actuator motor which is, a seriously negative consideration in small form factor disc drives where every millimetre of height is contested.

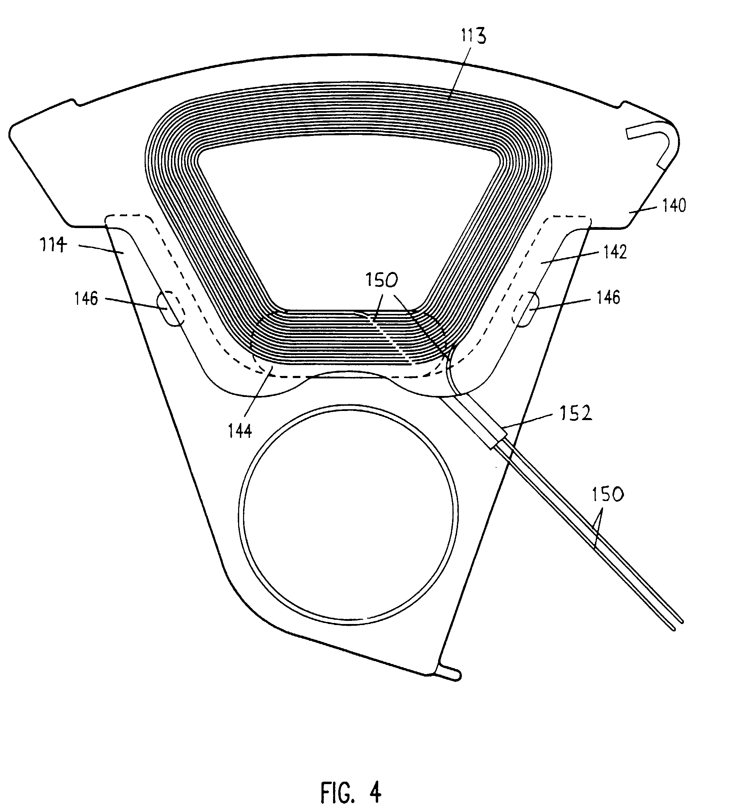

It is to overcome the problems illustrated in figures 2 and 3 that the present invention as illustrated in figure 4 is directed to.

With reference to figure 4, the preferred embodiment includes an actuator arm with a rear fork 114 receiving the coil 113 in a mould 140. When the coil 113 is first wound, the terminal ends 150 of the coil are left extending out of the coil to one side thereof rather than being cut short as shown in the prior art of figure 2. Sleeves or tubes 152 of an insulating material of sufficient strength to resist being crushed are then slid over the two terminal wires 150. A suitable insulating material is Teflon. The sleeves are slid up to the point where the terminal wires 150 join the wound coil 113.

The plastic mould 140 is then formed over the entire coil 113 and at least partially over said sleeves for said terminal wires. The mould and coil assembly is then assembled with the actuator arm between the rear fork 114. It is assembled so that the mould 140 is then arranged so that the mould and coil assembly underlies a region 142 of the actuator arm and overlies a region 144.

The assembly is completed by two pins 146 extending from the actuator arm which hold the moulding 140 in place with the coil 113 correctly positioned and supported thereby. The pins may comprise a plastic material.

In a second embodiment of the invention, the moulding 140 includes two pins extending to attach to said actuator arm to correctly position the coil 113 in relation to the actuator arm. The pins are adapted to enable them to be cut to allow removal of the moulding from the actuator.

The use of these sleeves and tubes 152 protect and support the wires 150 so as to provide improved tolerance of handling stresses during testing, assembly and during the lifetime of the disc drive. The manner of assembly and use of features provide economical gains over the prior art. Moreover, with the coil 113, wires 150 and sleeves 152, the height of the overall structure can be optimally minimised.

Should some defect in the voice coil motor 100 be found, the coil 113 can easily be removed from the actuator arm 114 and replaced by cutting offthe pins and pushing the mould 140 away. A replacement can then be used.

Finally, during the assembly of the coil 113 and the mould 140, the sleeves 152 protect the extended wires 150 so that the pressing force which forms and defines the mould over the coil does not deform, crimp or bend the wires.

While a preferred embodiment of the present invention has been described with reference to figure 4, the description is illustrative of the invention and is not to be construed as limiting the invention. For example, materials other than Teflon for the sleeves, may be used so long as they are of suitable strength and reliability to perform an equivalent function. Further, the coil moulding technique does not require a specific material or form.

## Claims

1. A voice coil motor (110) for positioning an actuator arm (114) of a disc drive (100), said motor comprising a coil (113) supported in a fork ofthe arm, the terminal wires (150) of said coil extending beyond said coil, said actuator arm comprises a mould (140) surrounding and supporting said coil, said mould attaching said coil to a rear forked portion of said actuator arm to hold said coil in place, characterized in that said terminal wires are disposed in respective sleeves (152) to protect and support said terminal wires (150), and in that said mould extends at least partially over said sleeves for said terminal wires.

2. A voice coil motor as claimed in claim 1, in which said sleeves is formed of Teflon.

3. A disc drive comprising a voice coil motor as claimed in claim 1 or 2, further comprising one or more pins (146) for fixing the mould to the actuator arm.

4. A disc drive comprising a voice coil motor as claimed in claim 1 or 2 wherein said mould includes first and second upright pins (146) extending to attach said mould to said actuator arm in a fashion allowing removal thereof by cutting said pins.

5. A disc drive (100) comprising the voice coil motor as claimed in claim 1 or 2, or a disc drive as claimed in claim 3 or 4 and having an actuator arm assembly (106), a casing (102) surrounding a spindle motor (105) and at least one disc (104), said actuator arm assembly (106) supporting the coil (113) of the voice coil motor (110) at one end thereof and a transducer (108) for selective placement over a track on said disc for reading and writing information on said disc track, said coil comprising a single wire wound in a prescribed shape and wherein said terminal wires comprise an input and output lead (150) extending away from said coil, and the sleeves (152) of insulating material are provided over said input and output leads in regions of said leads closely adjacent said coil to protect said leads from unnecessary flexing during testing and assembly of said actuator arm.

6. A method of manufacturing a voice coil motor and actuator arm assembly comprising the steps of:
forming a coil (113) of a voice coil motor (110), leaving the terminal wires (150) of said coil free;
positioning respective sleeves (152) around the terminal wires;
moulding around the coil and at least partially over said sleeves;
positioning the coil (113) and mould (140) in a rear forked portion (114) of an actuator arm; and removably securing the coil and mould to the actuator arm.

## Patentansprüche

1. Schwingspulenmotor (110) zur Positionierung eines Stellgliedarmes (114) eines Plattenlaufwerks (100), wobei der Motor eine in einer Gabel des Armes gehalterte Wicklung (113) aufweist und die Anschlußdrähte (15) der Wicklung sich über die Wicklung hinaus erstrecken, wobei der Stellgliedarm ein Formstück (140) aufweist, das die Wicklung umgibt und haltert, und wobei das Formstück die Wicklung an einem hinteren gegabelten Abschnitt des Stellgliedarmes befestigt, um die Wicklung an ihrem Platz zu halten,
dadurch gekennzeichnet, daß die Anschlußdrähte in jeweiligen Hülsen (152) angeordnet sind, um die Anschlußdrähte (150) zu schützen und zu haltern, und daß das Formstück sich zumindest teilweise über die Hülsen für die Anschlußdrähte erstreckt.

2. Schwingspulenmotor nach Anspruch 1, bei dem die Hülsen aus Teflon gebildet sind.

3. Plattenlaufwerk mit einem Schwingspulenmotor nach Anspruch 1 oder 2, das weiterhin ein oder mehrere Stifte (146) zur Festlegung des Formstückes an dem Stellgliedarm aufweist.

4. Plattenlaufwerk mit einem Schwingspulenmotor nach Anspruch 1 oder 2, bei dem das Formstück erste und zweite aufrecht stehende Stifte (146) einschließt, die sich zur Befestigung des Formstückes an dem Stellgliedarm in einer weise erstrecken, die die Entfernung des Formstückes durch Abschneiden der Stifte ermöglicht.

5. Plattenlaufwerk (100) mit dem Schwingspulenmotor, wie er im Anspruch 1 oder 2 beansprucht ist, oder ein Plattenlaufwerk, wie es in den Ansprüchen 3 oder 4 beansprucht ist und eine Stellglied-Armbaugruppe (106), ein einen Spindelmotor (105) und zumindest eine Platte (104) umgebendes Gehäuse (102) aufweist, wobei die Stellglied-Armbaugruppe (106) die Wicklung (113) des Schwinspulenmotors (110) an einem Ende und einen Wandler (108) zur selektiven Anordnung über einer Spur der Platte zum Lesen und Schreiben von Information auf die Plattenspur trägt, wobei die Wicklung einen einzigen Draht umfaßt, der auf eine vorgeschriebene Form gewickelt ist, und wobei die Anschlußdrähte eine Eingangs- und Ausgangsleitung (150) umfassen, die sich von der Wicklung fort erstrecken, und wobei die Hülsen (152) aus Isoliermaterial über den Eingangs- und Ausgangsleitungen in Bereichen der Leitungen eng benachbart zu der Wicklung vorgesehen sind, um die Leitungen gegenüber einer unnötigen Biegung während des Prüfens und des Zusammenbaus des Stellgliedarms zu schützen.

6. Verfahren zur Herstellung einer Schwingspulenmotor- und Stellgliedarm-Baugruppe mit den folgenden Schritten:
Formen einer Wicklung (113) eines Schwingspulenmotors (110), wobei die Anschlußdrähte (150) der Wicklung freigelassen werden,
Anordnen von jeweiligen Hülsen (152) um die Anschlußdrähte herum,
Abformen eines Formstückes um die Wicklung herum und zumindest teilweise über die Hülsen,
Anordnen der Wicklung(113) und des Formstückes (140) in einem hinteren gegabelten Abschnitt (114) eines Stellgliedarmes, und
lösbares Befestigen der Wicklung und des Formstuckes an dem Stellgliedarm.

## Revendications

1. Moteur (110) à bobine mobile pour positionner un bras actionneur (114) d'un lecteur de disquettes (100), ledit moteur comprenant une bobine (113) supportée sur une fourche du bras, les fils de borne (150) de ladite bobine s'étendant au-delà de ladite bobine, ledit bras actionneur comprenant un moule (140) qui entoure et qui supporte ladite bobine, ledit moule fixant ladite bobine à une partie arrière fourchue dudit bras actionneur afin de maintenir ladite bobine en place, caractérisé en ce que lesdits fils de borne sont disposés dans des manchons respectifs (152) afin de protéger et de supporter lesdits fils de borne (150) et en ce que ledit moule s'étend au moins partiellement sur lesdits manchons pour lesdits fils de borne.

2. Moteur à bobine mobile selon la revendication 1, dans lequel lesdits manchons sont formés en Téflon.

3. Lecteur de disquettes comprenant un moteur à bobine mobile selon la revendication 1 ou 2, comprenant en outre une ou plusieurs broches (146) afin de fixer le moule au bras actionneur.

4. Lecteur de disquettes comprenant un moteur à bobine mobile selon la revendication 1 ou 2, dans lequel ledit moule comprend des première et seconde broches droites (146) s'étendant afin de fixer ledit moule audit bras actionneur de manière à permettre son retrait en coupant lesdites broches.

5. Lecteur de disquettes (100) comprenant le moteur à bobine mobile selon la revendication 1 ou 2, ou lecteur de disquettes selon la revendication 3 ou 4 et ayant un ensemble formant bras actionneur (106), un boîtier (102) entourant un moteur à axe (105) et au moins une disquette (104), ledit ensemble formant bras actionneur (106) supportant la bobine (113) du moteur (110) à bobine mobile à une de ses extrémités et un transducteur (108) pour effectuer un placement sélectif sur une piste de ladite disquette afin de lire et d'écrire des informations sur ladite piste de disquette, ladite bobine comprenant un seul fil enroulé selon une forme prescrite et dans lequel lesdits fils de borne comprennent un conducteur d'entrée et de sortie (150) s'éloignant de ladite bobine, et des manchons (152) en matériau isolant sont fournis sur lesdits conducteurs d'entrée et sortie dans des zones desdits fils à proximité étroite de ladite bobine afin de protéger lesdits conducteurs contre une flexion superflue pendant les essais et l'assemblage dudit bras actionneur.

6. Procédé de fabrication d'un moteur à bobine mobile et d'un ensemble formant bras actionneur comprenant les étapes consistant à :
former une bobine (113) d'un moteur (110) à bobine mobile, en laissant libres les fils de borne (150) de ladite bobine ;
positionner les manchons respectifs (152) autour des fils de borne ;
mouler autour de la bobine au moins partiellement sur lesdits manchons ;
positionner la bobine (113) et le moule (140) dans une partie arrière fourchue (114) d'un bras actionneur ; et
fixer de manière amovible la bobine et le moule au bras actionneur.
